# EUROPEAN PATENT APPLICATION

(11) **EP 4 404 488 A1**
(43) Date of publication of application: **24.07.2024**
(21) Application number: 21957187.4
(22) Date of filing: 18.09.2021
(51) Int. Cl.: H04L 5/00

(54) **TEMPORARY REFERENCE SIGNAL TRANSMISSION METHOD AND DEVICE AND STORAGE MEDIUM**

(71) Applicant: Beijing Xiaomi Mobile Software Co., Ltd., Beijing 100085 (CN)
(72) Inventor: ZHAO, Qun, Beijing 100085 (CN)
(74) Representative: Stöckeler, Ferdinand
(86) International application number: PCT/CN2021/119460
(87) International publication number: WO 2023/039910

(57) **Abstract**

The present disclosure relates to a temporary reference signal transmission method and device and a storage medium in the field of communications. The method comprises: a user equipment (UE) receives media access control control element (MAC CE) signaling sent by a base station, the MAC CE signaling comprising a first indication domain; the UE determines a secondary cell to be activated, the first indication domain corresponding to said secondary cell; and the UE receives a temporary reference signal in said secondary cell. The method provided by the present disclosure is relatively low in signaling overhead, resource-saving, and relatively high in flexibility.

## Description

### TECHNICAL FIELD

The present disclosure relates to a field of communication technologies, and particularly to a method for sending a temporary reference signal, device and storage medium.

### BACKGROUND

In a communication system, in order to speed up an activation /deactivation process of a secondary cell (Scell), a base station would trigger transmission of a temporary reference signal (temporary RS) when indicating an activation state of the secondary cell via a medium access control (MAC) control element (CE) signaling.

In the related art, since the base station may configure multiple secondary cells (for example, up to 31 secondary cells) for a user equipment (UE), when the base station triggers the transmission of the temporary reference signal via the MAC CE signaling, it needs to indicate a transmission state of a temporary reference signal on each secondary cell.

The method in the related art leads to relatively large overhead of the MAC CE signaling.

### SUMMARY

The present disclosure provides a method and an apparatus for temporary reference signal transmission, and a storage medium, to solve the technical problem of high MAC CE signaling overhead in the existing methods.

According to embodiments of a first aspect of the present disclosure, there is provided a method for receiving a temporary reference signal. The method includes:
receiving, by a user equipment (UE), a medium access control control element (MAC CE) signaling sent by a base station, in which the MAC CE signaling comprises a first indication field;
determining, by the UE, a secondary cell to be activated, wherein the first indication field corresponds to the secondary cell to be activated; and
receiving, by the UE, a temporary reference signal in the secondary cell to be activated.

Optionally, in an embodiment of the present disclosure, the MAC CE signaling further includes a second indication field, and the second indication field corresponds to the first indication field.

Optionally, in another embodiment of the present disclosure, one second indication field corresponds to an identifier of one secondary cell, and is configured to indicate an activation state of the secondary cell.

According to embodiments of a second aspect of the present disclosure, there is provided a method for sending a temporary reference signal. The method includes:
sending, by a base station, a MAC CE signaling, in which the MAC CE signaling includes a first indication field, and the first indication field corresponds to a secondary cell to be activated;
sending, by the base station, a temporary reference signal in a determined secondary cell to be activated.

Optionally, in an embodiment of the present disclosure, the MAC CE signaling further includes a second indication field, and the second indication field corresponds to the first indication field.

Optionally, in another embodiment of the present disclosure, one second indication field corresponds to an identifier of one secondary cell, and is configured to indicate an activation state of the secondary cell.

According to embodiments of a third aspect of the present disclosure, there is provided a method for receiving a temporary reference signal. The method includes:
receiving, by a UE, indication information sent by a base station, in which the indication information includes a correspondence relationship between a first indication field in a medium access control control element (MAC CE) signaling and a secondary cell to be activated;
determining, by the UE, the secondary cell to be activated according to the indication information; and
receiving, by the UE, a temporary reference signal in the secondary cell to be activated.

Optionally, in an embodiment of the present disclosure, the indication information is one of:
downlink control information;
coding information of downlink control information; or
a MAC CE signaling.

Optionally, in another embodiment of the present disclosure, the indication information includes at least one of:
a control resource set ID;
a search space ID; or
a cell ID.

Optionally, in another embodiment of the present disclosure, the first indication field corresponds to a temporary reference signal subset.

Optionally, in another embodiment of the present disclosure, determining, by the UE, the secondary cell to be activated according to the indication information, includes:
determining, by the UE, the secondary cell to be activated according to configuration information of the temporary reference signal subset.

Optionally, in another embodiment of the present disclosure, the configuration information of the temporary reference signal subset is N groups of temporary reference signal configuration information among M groups of temporary reference signal configuration information of the secondary cell to be activated, in which M and N are positive integers, and N≤M.

According to embodiments of a fourth aspect of the present disclosure, there is provided a method for sending a temporary reference signal. The method includes:
sending, by a base station, indication information to a UE, in which the indication information includes a correspondence relationship between a first indication field in a MAC CE signaling and a secondary cell to be activated; and
sending, by the base station, a temporary reference signal in a determined secondary cell to be activated.

Optionally, in an embodiment of the present disclosure, the indication information is one of:
downlink control information;
coding information of downlink control information; or
a MAC CE signaling.

Optionally, in another embodiment of the present disclosure, the indication information includes at least one of:
a control resource set ID;
a search space ID; and
a cell ID.

Optionally, in another embodiment of the present disclosure, the first indication field corresponds to a temporary reference signal subset.

Optionally, in another embodiment of the present disclosure, the method further includes:
determining, by the base station, the secondary cell to be activated according to configuration information of the temporary reference signal subset.

Optionally, in another embodiment of the present disclosure, the configuration information of the temporary reference signal subset is N groups of temporary reference signal configuration information among M groups of temporary reference signal configuration information of the secondary cell to be activated, in which M and N are positive integers, and N≤M.

According to embodiments of a fifth aspect of the present disclosure, there is provided an apparatus for receiving a temporary reference signal. The apparatus includes:
a receiving module, configured to receive a medium access control control element (MAC CE) signaling sent by a base station, in which the MAC CE signaling includes a first indication field; and
a processing module, configured to determine a secondary cell to be activated, in which the first indication field corresponds to the secondary cell to be activated.

The receiving module is further configured to receive a temporary reference signal in the secondary cell to be activated.

According to embodiments of a sixth aspect of the present disclosure, there is provided an apparatus for sending a temporary reference signal. The apparatus includes:
a sending module, configured to send a MAC CE signaling, in which the MAC CE signaling includes a first indication field, and the first indication field corresponds to a secondary cell to be activated.

The sending module is further configured to send a temporary reference signal in a determined secondary cell to be activated.

According to embodiments of a seventh aspect of the present disclosure, there is provided an apparatus for receiving a temporary reference signal. The apparatus includes:
a receiving module, configured to receive indication information sent by a base station, in which the indication information includes a correspondence relationship between a first indication field in a medium access control control element (MAC CE) signaling and a secondary cell to be activated; and
a processing module, configured to determine the secondary cell to be activated according to the indication information.

The receiving module is further configured to receive a temporary reference signal in the secondary cell to be activated.

According to embodiments of a seventh aspect of the present disclosure, there is provided an apparatus for sending a temporary reference signal. The apparatus includes:
a sending module, configured to send indication information to the UE, in which the indication information includes a correspondence relationship between a first indication field in a MAC CE signaling and a secondary cell to be activated; and
a processing module, configured to send a temporary reference signal in a determined secondary cell to be activated.

According to embodiments of yet another aspect of the present disclosure, there is provided a communication device. The device includes a processor and a memory. A computer program is stored in the memory, and the processor executes the computer program stored in the memory, to cause the device to perform the method provided in the embodiment of the first aspect or the third aspect above.

According to embodiments of yet another aspect of the present disclosure, there is provided a communication device. The device includes a processor and a memory. A computer program is stored in the memory, and the processor executes the computer program stored in the memory, to cause the device to perform the method provided in the above embodiment of another aspect.

According to embodiments of the second aspect or the fourth aspect of the present disclosure, there is provided a communication device. The device includes: a processor and an interface circuit.

The interface circuit is configured to receive code instructions and send them to the processor.

The processor is configured to run the code instructions to execute the method provided in the embodiments of the first aspect or the third aspect.

According to embodiments of yet another aspect of the present disclosure, there is provided a communication device. The device includes: a processor and an interface circuit.

The interface circuit is configured to receive code instructions and send them to the processor.

The processor is configured to run the code instructions to execute the method provided in the embodiments of the second aspect or the fourth aspect.

According to embodiments of yet another aspect of the present disclosure, there is provided a computer-readable storage medium having stored thereon instructions, when being executed, enable the method provided by the embodiments of the first aspect or the third aspect to be implemented.

According to embodiments of yet another aspect of the present disclosure, there is provided a computer-readable storage medium having stored thereon instructions, when being executed, enable the method provided by the embodiments of the second aspect or the fourth aspect to be implemented.

To sum up, in the method and apparatus for temporary reference signal transmission, and storage medium provided in the present disclosure, the UE receives the MAC CE signaling sent by the base station, in which the MAC CE signaling includes the first indication field, and the first indication field corresponds to the secondary cell to be activated, then the UE determines the secondary cell to be activated, and receives the temporary reference signal in the secondary cell to be activated. It can be seen that, in the embodiment of the present disclosure, the MAC CE signaling is mainly configured to trigger the transmission of the temporary reference signal of the secondary cell to be activated. That is, the MAC CE signaling is mainly configured to indicate the transmission state of the temporary reference signal of the secondary cell to be activated, without indicating transmission states of reference signals of all secondary cells, so that the overhead of MAC CE signaling can be saved, the signaling cost can be reduced, and resources can be saved. Furthermore, transmission states of temporary reference signals of different secondary cells to be activated can be indicated through the MAC CE signaling each time, and thus the flexibility is high.

### BRIEF DESCRIPTION OF THE DRAWINGS

The above and/or additional aspects and advantages of the present disclosure will become apparent and understandable from the following description of embodiments in conjunction with the accompanying drawings.
FIG. 1a is a schematic flowchart of a method for receiving a temporary reference signal provided by an embodiment of the present disclosure.
FIG. 1b is a schematic structural diagram of a MAC CE signaling provided by an embodiment of the present disclosure.
FIG. 1c is a schematic structural diagram of another MAC CE signaling provided by an embodiment of the present disclosure.
FIG. 1d is a schematic structural diagram of another MAC CE signaling provided by an embodiment of the present disclosure.
FIG. 1e is a schematic structural diagram of another MAC CE signaling provided by an embodiment of the present disclosure.
FIG. 2 is a schematic flowchart of a method for receiving a temporary reference signal provided by an embodiment of the present disclosure.
Fig. 3 is a schematic flowchart of a method for sending a temporary reference signal provided by an embodiment of the present disclosure.
FIG. 4 is a schematic flowchart of a method for sending a temporary reference signal provided by an embodiment of the present disclosure.
FIG. 5 is a schematic structural diagram of an apparatus 500 for sending a temporary reference signal provided by an embodiment of the present disclosure.
FIG. 6 is a schematic structural diagram of an apparatus 600 for sending a temporary reference signal provided by an embodiment of the present disclosure.
FIG. 7 is a schematic structural diagram of an apparatus 700 for receiving a temporary reference signal provided by an embodiment of the present disclosure.
FIG. 8 is a schematic structural diagram of an apparatus 800 for receiving a temporary reference signal provided by an embodiment of the present disclosure.
Fig. 9 is a block diagram of a user equipment provided by an embodiment of the present disclosure.
Fig. 10 is a block diagram of a base station provided by an embodiment of the present disclosure.

### DETAILED DESCRIPTION

Reference will now be made in detail to exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the present disclosure. Rather, they are merely examples of apparatuses and methods consistent with aspects of the disclosed embodiments as recited in the appended claims.

Terms used in embodiments of the present disclosure are for the purpose of describing specific embodiments only, and are not intended to limit the embodiments of the present disclosure. As used in the examples of the present disclosure and the appended claims, the singular forms "a" and "an" are also intended to include the plural unless the context clearly dictates otherwise. It should also be understood that the term "and/or" as used herein refers to and includes any and all possible combinations of one or more of the associated listed items.

It should be understood that although the embodiments of the present disclosure may use the terms first, second, third, etc. to describe various information, the information should not be limited to these terms. These terms are only configured to distinguish information of the same type from one another. For example, without departing from the scope of the embodiments of the present disclosure, first information may also be called second information, and similarly, second information may also be called first information.

A method and an apparatus for transmitting a temporary reference signal, and a storage medium provided by the embodiments of the present disclosure will be described in detail below with reference to the accompanying drawings.

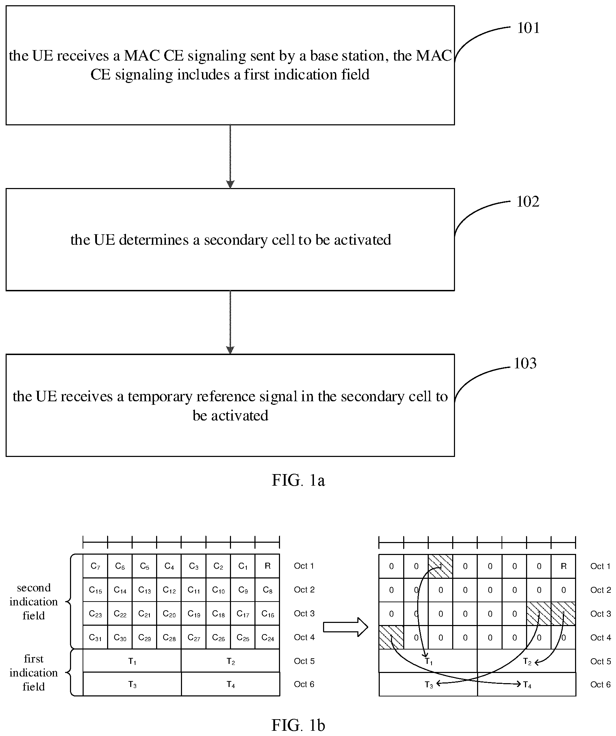

Fig. 1a is a schematic flowchart of a method for receiving a temporary reference signal provided by an embodiment of the present disclosure. The method is performed by a UE. As shown in Fig. 1a, the method may include the following steps.

In step 101, the UE receives a MAC CE signaling sent by a base station. The MAC CE signaling includes a first indication field.

In an embodiment of the present disclosure, the first indication field in the MAC CE signaling corresponds to a secondary cell to be activated, and the first indication field is configured to trigger transmission of the temporary reference signal of the corresponding secondary cell to be activated.

In an embodiment of the present disclosure, the MAC CE signaling may further include a second indication field. The second indication field may be, for example, a C field. One second indication field may correspond to one auxiliary cell, and is configured to indicate an activation state of the corresponding secondary cell.

Specifically, in an embodiment of the present disclosure, a second indication field may specifically carry a number Ci and a value of Ci of an i-th secondary cell corresponding to it, in which the value of Ci is configured to indicate an activation state of the i-th secondary cell. For example, in an embodiment of the present disclosure, when Ci=1, it indicates that the activation state of the i-th secondary cell is: activated; when Ci=0, it indicates that the activation state of the i-th secondary cell is: deactivated. Therefore, the UE can determine the activation state of each secondary cell based on the second indication field in the MAC CE signaling.

Further, it should be noted that, in an embodiment of the present disclosure, the second indication field also corresponds to the first indication field. The second indication field corresponding to the first indication field may specifically include: the first indication field corresponding only to a second indication field of the secondary cell to be activated.

As an example, FIG. 1b is a schematic structural diagram of a MAC CE signaling provided by an embodiment of the present disclosure. As shown in FIG. 1b, the MAC CE signaling includes a first indication field (for example, the length may be 4 bits) and a second indication field area. Referring to FIG. 1b, it can be seen that the second indication field indicates that secondary cells numbered C₅, C₁₆, C₁₇, and C₃₁ enter the activation state, so that the secondary cell #5, the secondary cell #16, the secondary cell #17, and the secondary cell #31 can be determined as the cells to be activated, and the number of cells to be activated is 4. Based on this, since the first indication field corresponds to the cell to be activated, the number of the first indication field should also be 4, which are respectively the first indication field T1, the first indication field T2, the first indication field T3, and the first indication field T4. Referring to FIG. 1b, it can be seen that a correspondence relationship between the first indication fields and the secondary cells to be activated is shown in Table 1.

**Table 1**

| secondary cell number | first indication field |
|---|---|
| #5 | T1 |
| #16 | T2 |
| #17 | T3 |
| #31 | T4 |

It can be known from Table 1 that, the first indication field T1 corresponds to the secondary cell #5 to be activated, and is configured to trigger transmission of a temporary reference signal of the secondary cell #5 to be activated; the second indication field T2 corresponds to the secondary cell #16 to be activated, and is configured to trigger transmission of a temporary reference signal of the secondary cell #16 to be activated; the third indication field T3 corresponds to the secondary cell #17 to be activated, and is configured to trigger transmission of a temporary reference signal of the secondary cell #17 to be activated; the fourth indication field T4 corresponds to the secondary cell #31 to be activated, and is configured to trigger transmission of a temporary reference signal of the secondary cell #31 to be activated.

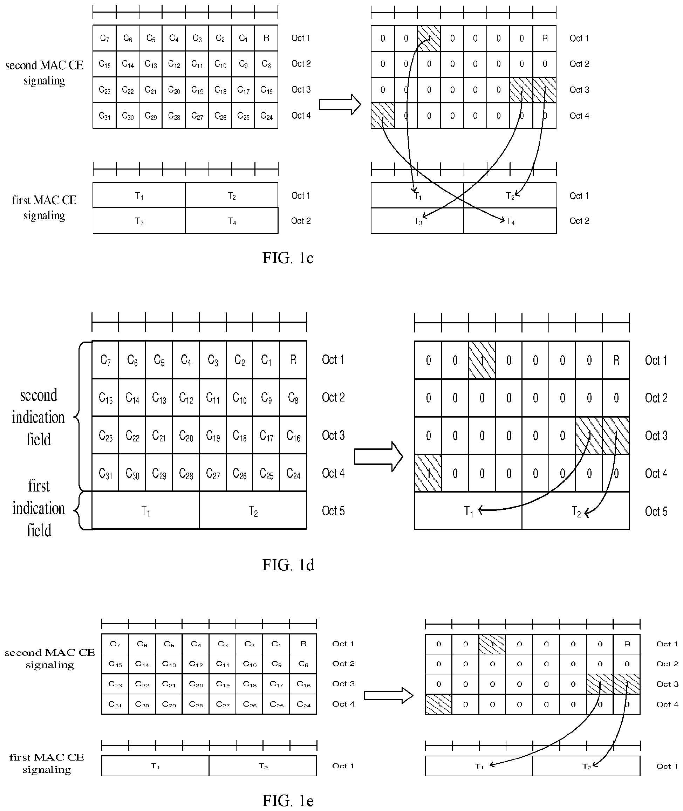

In addition, in another embodiment of the present disclosure, first indication fields and second indication fields may also be included in different MAC CE signalings. As an example, FIG. 1c is a schematic structural diagram of another MAC CE signaling provided by an embodiment of the present disclosure. As shown in FIG. 1c, a first MAC CE signaling includes first indication fields, and a second MAC CE signaling includes second indication fields, and a first indication field corresponds to a second indication field of a secondary cell to be activated.

Further, it should be noted that in an embodiment of the present disclosure, a first indication field may only correspond to a secondary cell activated for a first time, and does not need to correspond to any secondary cell to be activated, so as to save signaling overhead to a great extent. Moreover, for a secondary cell that is not activated for a first time, when it is activated for a second time or subsequent activation, the transmission of the temporary reference signal may be directly triggered without the indication of the first indication field.

As an example, FIG. 1d is a schematic structural diagram of another MAC CE signaling provided by an embodiment of the present disclosure. As shown in FIG. 1d, first indication fields and second indication fields are included in a same MAC CE signaling, and the second indication field indicates that secondary cells to be activated are the secondary cell #5, the secondary cell #16, the secondary cell #17, and the secondary cell #31. Only the secondary cell #16 and the secondary cell #17 are secondary cells activated for the first time, and the first indication fields only correspond to the secondary cell #16 and secondary cell #17 activated for the first time. Table 2 is a correspondence relationship table between the first indication fields in the MAC CE signaling shown in FIG. 1d and the secondary cells to be activated.

**Table 2**

| secondary cell number | first indication field |
|---|---|
| #17 | T1 |
| #16 | T2 |

It can be seen from Table 2 that, the first indication field T1 corresponds to the secondary cell #17 to be activated, and is configured to trigger transmission of a temporary reference signal of the secondary cell #17 to be activated; the second indication field T2 corresponds to the secondary cell #16 to be activated, and is configured to trigger transmission of a temporary reference signal of the secondary cell #16 to be activated.

Furthermore, FIG. 1e is a schematic structural diagram of another MAC CE signaling provided by an embodiment of the present disclosure. As shown in FIG. 1e, first indication fields and second indication fields are included in different MAC CE signaling. A first MAC CE signaling includes the first indication fields, a second MAC CE signaling includes the second indication fields. The second indication field indicates that secondary cells to be activated are the secondary cell #5, the secondary cell #16, the secondary cell #17, and the secondary cell #31. Only the secondary cell #16 and the secondary cell #17 are secondary cells activated for a first time, the first indication fields only correspond to the secondary cell #16 and the secondary cell #17 activated for the first time.

In addition, it should be noted that, in an embodiment of the present disclosure, since the number of cells to be activated each time may be different, the number of the first indication fields included in the MAC CE signaling will also be different. That is, the length of a MAC CE signaling sent each time is variable. Based on this, in an embodiment of the present disclosure, a length of a PDU of the MAC CE signaling may also be additionally indicated. For example, in an embodiment of the present disclosure, the length of the PDU (packet data unit) of the MAC CE signaling may be indicated via an L field.

Finally, optionally, in an embodiment of the present disclosure, the first indication field may carry temporary reference signal triggering information, and the temporary reference signal triggering information may be configured to trigger transmission of a temporary reference signal of the corresponding cell to be activated.

In step 102, the UE determines a secondary cell to be activated.

In an embodiment of the present disclosure, the method for the UE to determine the secondary cell to be activated may be: the UE determines the secondary cell to be activated based on the value of Ci carried in the second indication field.

In step 103, the UE receives a temporary reference signal in the secondary cell to be activated.

Optionally, in an embodiment of the present disclosure, the UE may specifically receive the temporary reference signal based on the temporary reference signal triggering information carried in the first indication field corresponding to the cell to be activated.

To sum up, in the method for temporary reference signal transmission provided in the present disclosure, the UE receives the MAC CE signaling sent by the base station, in which the MAC CE signaling includes the first indication field, and the first indication field corresponds to the secondary cell to be activated, then the UE determines the secondary cell to be activated, and receives the temporary reference signal in the secondary cell to be activated. It can be seen that, in the embodiments of the present disclosure, the MAC CE signaling is mainly configured to trigger the transmission of the temporary reference signal of the secondary cell to be activated, that is, the MAC CE signaling is mainly configured to indicate the transmission state of the temporary reference signal of the secondary cell to be activated without indicating transmission states of reference signals of all secondary cells, so that the overhead of MAC CE signaling can be saved, the signaling cost can be reduced, and resources can be saved. Furthermore, transmission states of temporary reference signals of different secondary cells to be activated can be indicated through the MAC CE signaling each time, and thus the flexibility is high.

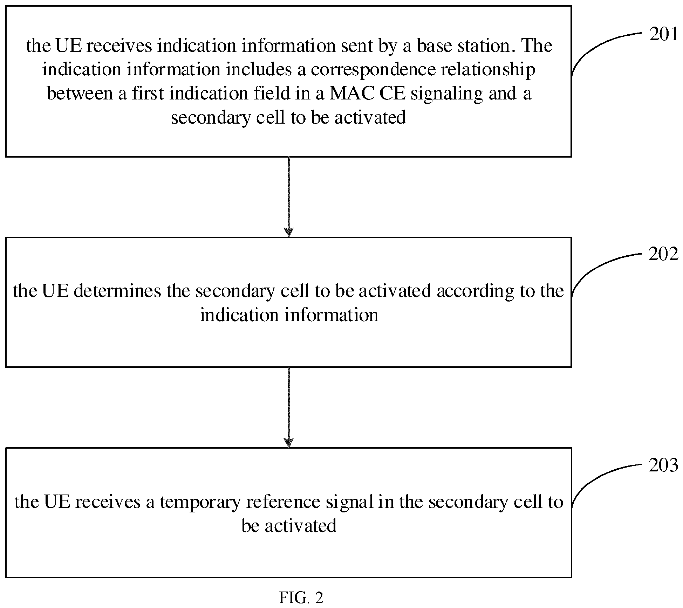

FIG. 2 is a schematic flowchart of a method for receiving a temporary reference signal provided by an embodiment of the present disclosure. The method is performed by a UE. As shown in FIG. 2, the method may include the following steps.

In step 201, the UE receives indication information sent by a base station. The indication information includes a correspondence relationship between a first indication field in a MAC CE signaling and a secondary cell to be activated.

For the introduction about the MAC CE signaling, the first indication field, and the second indication field included in the MAC CE signaling, reference may be made to the description in the foregoing embodiments, and details will not be described in this embodiment of the present disclosure.

In step 202, the UE determines the secondary cell to be activated according to the indication information.

In an embodiment of the present disclosure, the indication information may further include a subset selection field, and the subset selection field is configured to indicate a temporary reference signal subset corresponding to the first indication field. In an embodiment of the present disclosure, configuration information of the temporary reference signal subset may be: N groups of temporary reference signal configuration information among all M groups of temporary reference signal configuration information of the secondary cell to be activated. In an embodiment of the present disclosure, the M groups of temporary reference signal configuration information may be configured by the base station to the UE through a RRC (radio resource control) signaling, in which M and N are positive integers, and N≤M. The temporary reference signal configuration information may include at least one of time frequency resources of the temporary reference signal, the number of bursts of the temporary reference signal, and a transmission timing of the temporary reference signal. Therefore, the UE can receive the temporary reference signal in the corresponding cell to be activated based on the temporary reference signal configuration information subset.

Specifically, in an embodiment of the present disclosure, the bit number is carried in the subset selection field. There is a correspondence relationship between the bit number carried in the subset selection field and the temporary reference signal subset, and the different bit numbers correspond to different temporary reference signal subsets. Based on this, after obtaining the indication information, the UE may determine the temporary reference signal subset corresponding to the first indication field based on the correspondence relationship and the bit number in the subset selection field of the indication information.

Exemplarily, in an embodiment of the present disclosure, the length of the subset selection field may be 1 bit. Table 3 is a correspondence relationship between a subset selection field and a temporary reference signal subset provided by an embodiment of the present disclosure.

**Table 3**

| bit number carried in the subset selection field | temporary reference signal subset |
|---|---|
| 0 | indicating temporary reference signal configuration information numbered from 0 to 15 |
| 1 | indicating temporary reference signal configuration information numbered from 16 to 31 |

As shown in Table 3, when the bit number carried by the subset selection field is 0, the temporary reference signal subset corresponding to the first indication field is temporary reference signal configuration information numbered 0 to 15 among all M groups of temporary reference signal configuration information of the secondary cell to be activated corresponding to the first indication field; when the bit number carried by the subset selection field is 1, the temporary reference signal subset corresponding to the first indication field is temporary reference signal configuration information numbered 16 to 31 among all M groups of temporary reference signal configuration information of the secondary cell to be activated corresponding to the first indication field.

It should be noted that, in an embodiment of the present disclosure, the above correspondence relationship between the bit number carried in the subset selection field and the temporary reference signal subset may be predefined by a protocol. In another embodiment of the present disclosure, the above correspondence relationship between the subset selection field and the temporary reference signal subset may be configured by the base station to the UE through RRC signaling.

Further, it should be noted that, in an embodiment of the present disclosure, the number of subset selection fields in the indication information may be only one. At this time, the subset selection field is configured to indicate the temporary reference signal subsets corresponding to all the first indication fields in the MAC CE signaling. That is, assuming that when the bit number carried by the subset selection field is 0, then all the temporary reference signal subsets of the first indication fields are: the temporary reference signal configuration information numbered 16-31 among all M groups of temporary reference signal configuration information of the corresponding secondary cell to be activated.

In another embodiment of the present disclosure, the number of the subset selection fields may be in one-to-one correspondence with the first indication fields, and at this time, each subset selection field is only configured to indicate a temporary reference signal subset of a corresponding first indication field.

Further, in an embodiment of the present disclosure, when the UE determines a temporary reference signal subset corresponding to each first indication field, it can subsequently receive a temporary reference signal in a corresponding cell to be activated based on the temporary reference signal subset.

In addition, in an embodiment of the present disclosure, the manner in which the base station sends the indication information to the UE may be: explicit sending.

In an embodiment of the present disclosure, the method for sending the indication information to the UE in an explicit sending manner may include at least one of:
method 1: sending the indication information to the UE through a downlink control information (DCI) signaling, in which the indication information may be carried in an existing information field of the DCI signaling, and the DCI signaling is a DCI signaling configured to schedule a PDSCH (physical downlink shared channel) carrying a MAC CE signaling;
method 2: sending the indication information to the UE through coding information of a DCI signaling, in which the coding information may be frozen bits in coding bits of the DCI signaling; and the DCI signaling is a DCI signaling configured to schedule a PDSCH carrying a MAC CE signaling;
method 3: sending through a MAC CE signaling.

Further, in another embodiment of the present disclosure, the manner in which the base station sends the indication information to the UE may be: implicit sending.

In an embodiment of the present disclosure, the method for sending the indication information to the UE in an implicit sending manner may include:
sending to the UE a PDCCH (physical downlink control channel) control resource set (CORSET) identifier (ID, also called number), a search space ID, or a cell ID through a DCI signaling. The CORSET ID, search space ID, and cell ID are configured to indicate the above indication information; and the PDCCH may specifically be a PDCCH configured to send a MAC CE signaling.

And, it should be noted that, in an embodiment of the present disclosure, when the above CORSET ID, search space ID, or cell ID is sent through the DCI signaling, the sending may be specifically performed through a new information field different from an existing information field in the DCI signaling.

In step 203, the UE receives a temporary reference signal in the secondary cell to be activated.

Optionally, in an embodiment of the present disclosure, the first indication field in the MAC CE signaling may carry temporary reference signal triggering information, and the UE may trigger receiving the temporary reference signal in the secondary cell is to be activated based on the temporary reference signal triggering information carried in the first indication field.

To sum up, in the method for temporary reference signal transmission provided in the present disclosure, the UE receives the MAC CE signaling sent by the base station, in which the MAC CE signaling includes the first indication field, and the first indication field corresponds to the secondary cell to be activated, then the UE determines the secondary cell to be activated, and receives the temporary reference signal in the secondary cell to be activated. It can be seen that, in the embodiments of the present disclosure, the MAC CE signaling is mainly configured to trigger the transmission of the temporary reference signal of the secondary cell to be activated. That is, the MAC CE signaling is mainly configured to indicate the transmission state of the temporary reference signal of the secondary cell to be activated, without indicating transmission states of reference signals of all secondary cells, so that the overhead of MAC CE signaling can be saved, and the signaling cost can be reduced.

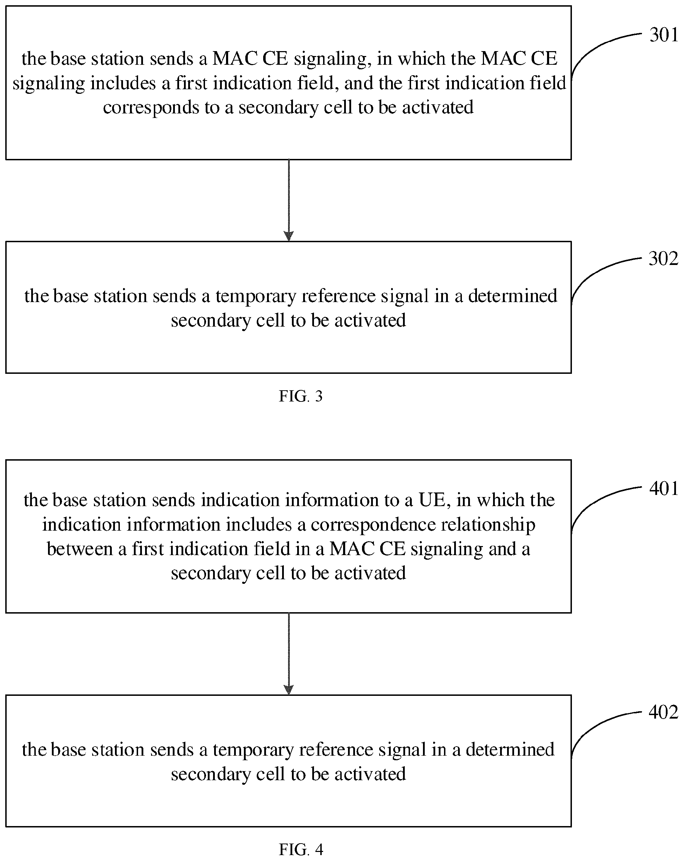

FIG. 3 is a schematic flowchart of a method for sending a temporary reference signal provided by an embodiment of the present disclosure. The method is performed by a base station. As shown in FIG. 3, the method may include the following steps.

In step 301, the base station sends a MAC CE signaling, in which the MAC CE signaling includes a first indication field, and the first indication field corresponds to a secondary cell to be activated.

In an embodiment of the present disclosure, the MAC CE signaling may further include a second indication field, and the second indication field corresponds to the first indication field.

In step 302, the base station sends a temporary reference signal in a determined secondary cell to be activated.

For related introductions about the MAC CE signaling, the first indication field, the secondary cell to be activated, and the second indication field in steps 301-302, reference may be made to the above embodiments, and details will not be repeated here in this embodiment of the present disclosure.

To sum up, in the method for temporary reference signal transmission provided in the present disclosure, the UE receives the MAC CE signaling sent by the base station, in which the MAC CE signaling includes the first indication field, and the first indication field corresponds to the secondary cell to be activated, then the UE determines the secondary cell to be activated, and receives the temporary reference signal in the secondary cell to be activated. It can be seen that, in the embodiments of the present disclosure, the MAC CE signaling is mainly configured to trigger the transmission of the temporary reference signal of the secondary cell to be activated. That is, the MAC CE signaling is mainly configured to indicate the transmission state of the temporary reference signal of the secondary cell to be activated, without indicating transmission states of reference signals of all secondary cells, so that the overhead of MAC CE signaling can be saved, the signaling cost can be reduced, and the resources are saved. Further, transmission states of temporary reference signals of different secondary cells to be activated can be indicated through the MAC CE signaling each time, and thus the flexibility is high.

FIG. 4 is a schematic flowchart of a method for sending a temporary reference signal provided by an embodiment of the present disclosure. The method is performed by a base station. As shown in FIG. 4, the method may include the following steps.

In step 401, the base station sends indication information to a UE, in which the indication information includes a correspondence relationship between a first indication field in a MAC CE signaling and a secondary cell to be activated.

In step 402, the base station sends a temporary reference signal in a determined secondary cell to be activated.

For relevant introductions about steps 401-402, reference may be made to the descriptions of the foregoing embodiments, and this embodiment of the present disclosure will not repeat them here.

To sum up, in the method for temporary reference signal transmission provided in the present disclosure, the UE receives the MAC CE signaling sent by the base station, in which the MAC CE signaling includes the first indication field, and the first indication field corresponds to the secondary cell to be activated, then the UE determines the secondary cell to be activated, and receives the temporary reference signal in the secondary cell to be activated. It can be seen that, in the embodiments of the present disclosure, the MAC CE signaling is mainly configured to trigger the transmission of the temporary reference signal of the secondary cell to be activated. That is, the MAC CE signaling is mainly configured to indicate the transmission state of the temporary reference signal of the secondary cell to be activated, without indicating transmission states of reference signals of all secondary cells, so that the overhead of MAC CE signaling can be saved, the signaling cost can be reduced.

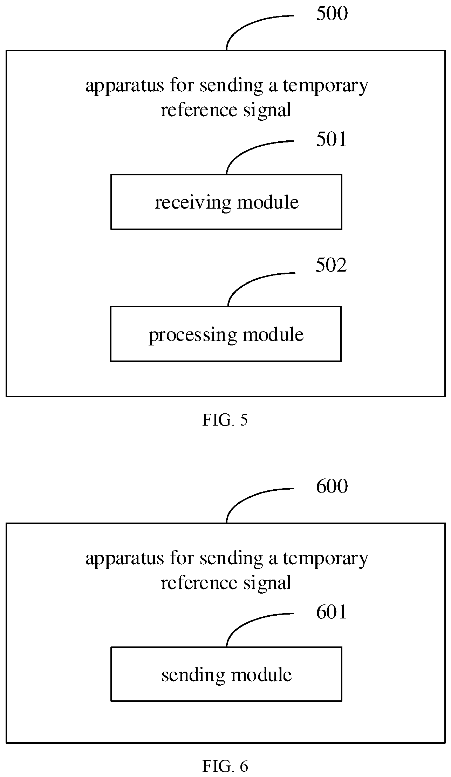

FIG. 5 is a schematic structural diagram of an apparatus 500 for sending a temporary reference signal provided by an embodiment of the present disclosure. As shown in FIG. 5, the apparatus includes:
a receiving module 501, configured to receive a MAC CE signaling sent by a base station, in which the MAC CE signaling includes a first indication field;
a processing module 502, configured to determine a secondary cell to be activated, in which the first indication field corresponds to the secondary cell to be activated.

The receiving module 501 is further configured to receive a temporary reference signal in the secondary cell to be activated.

To sum up, in the apparatus for temporary reference signal transmission provided in the present disclosure, the UE receives the MAC CE signaling sent by the base station, in which the MAC CE signaling includes the first indication field, and the first indication field corresponds to the secondary cell to be activated, then the UE determines the secondary cell to be activated, and receives the temporary reference signal in the secondary cell to be activated. It can be seen that, in the embodiments of the present disclosure, the MAC CE signaling is mainly configured to trigger the transmission of the temporary reference signal of the secondary cell to be activated. That is, the MAC CE signaling is mainly configured to indicate the transmission state of the temporary reference signal of the secondary cell to be activated, without indicating transmission states of reference signals of all secondary cells, so that the overhead of MAC CE signaling can be saved, the signaling cost can be reduced, and the resources are saved. Further, transmission states of temporary reference signals of different secondary cells to be activated can be indicated through the MAC CE signaling each time, and thus the flexibility is high.

Optionally, in an embodiment of the present disclosure, the MAC CE signaling further includes a second indication field, and the second indication field corresponds to the first indication field.

Optionally, in another embodiment of the present disclosure, one second indication field corresponds to an identifier of one secondary cell, and is configured to indicate an activation state of the secondary cell.

FIG. 6 is a schematic structural diagram of an apparatus 600 for sending a temporary reference signal provided by an embodiment of the present disclosure. As shown in FIG. 6, the apparatus includes:
a sending module 601, configured to send a MAC CE signaling, in which the MAC CE signaling includes a first indication field, and the first indication field corresponds to a secondary cell to be activated.

The sending module is further configured to send a temporary reference signal in a determined secondary cell to be activated.

To sum up, in the apparatus for temporary reference signal transmission provided in the present disclosure, the UE receives the MAC CE signaling sent by the base station, in which the MAC CE signaling includes the first indication field, and the first indication field corresponds to the secondary cell to be activated, then the UE determines the secondary cell to be activated, and receives the temporary reference signal in the secondary cell to be activated. It can be seen that, in the embodiments of the present disclosure, the MAC CE signaling is mainly configured to trigger the transmission of the temporary reference signal of the secondary cell to be activated. That is, the MAC CE signaling is mainly configured to indicate the transmission state of the temporary reference signal of the secondary cell to be activated, without indicating transmission states of reference signals of all secondary cells, so that the overhead of MAC CE signaling can be saved, the signaling cost can be reduced, and the resources are saved. Further, transmission states of temporary reference signals of different secondary cells to be activated can be indicated through the MAC CE signaling each time, and thus the flexibility is high.

Optionally, in an embodiment of the present disclosure, the MAC CE signaling further includes a second indication field, and the second indication field corresponds to the first indication field.

Optionally, in another embodiment of the present disclosure, one second indication field corresponds to an identifier of one secondary cell, and is configured to indicate an activation state of the secondary cell.

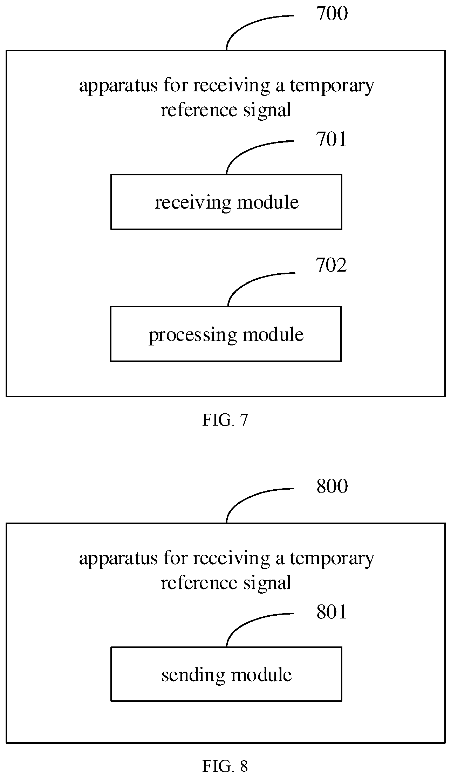

FIG. 7 is a schematic structural diagram of an apparatus 700 for receiving a temporary reference signal provided by an embodiment of the present disclosure. As shown in FIG. 7, the apparatus includes:
a receiving module 701, configured to receive indication information sent by a base station, in which the indication information includes a correspondence between a first indication field in a MAC CE signaling and a secondary cell to be activated; and
a processing module 702, configured to determine the secondary cell to be activated according to the indication information.

The receiving module 701 is further configured to receive a temporary reference signal in the secondary cell to be activated.

To sum up, in the apparatus for temporary reference signal transmission provided in the present disclosure, the UE receives the MAC CE signaling sent by the base station, in which the MAC CE signaling includes the first indication field, and the first indication field corresponds to the secondary cell to be activated, then the UE determines the secondary cell to be activated, and receives the temporary reference signal in the secondary cell to be activated. It can be seen that, in the embodiments of the present disclosure, the MAC CE signaling is mainly configured to trigger the transmission of the temporary reference signal of the secondary cell to be activated. That is, the MAC CE signaling is mainly configured to indicate the transmission state of the temporary reference signal of the secondary cell to be activated, without indicating transmission states of reference signals of all secondary cells, so that the overhead of MAC CE signaling can be saved, the signaling cost can be reduced, and the resources are saved. Further, transmission states of temporary reference signals of different secondary cells to be activated can be indicated through the MAC CE signaling each time, and thus the flexibility is high.

Optionally, in an embodiment of the present disclosure, the indication information is one of the following:
downlink control information;
coding information of downlink control information; or
a MAC CE signaling.

Optionally, in another embodiment of the present disclosure, the indication information includes at least one of:
a control resource set ID;
a search space ID; and
a cell ID.

Optionally, in another embodiment of the present disclosure, the first indication field corresponds to a temporary reference signal subset.

Optionally, in another embodiment of the present disclosure, the processing module 702 is further configured to:
determine the secondary cell to be activated according to configuration information of the temporary reference signal subset.

Optionally, in another embodiment of the present disclosure, the configuration information of the temporary reference signal subset is N groups of temporary reference signal configuration information among M groups of temporary reference signal configuration information of the secondary cell to be activated, in which M and N are positive integers, and N≤M.

FIG. 8 is a schematic structural diagram of an apparatus 800 for receiving a temporary reference signal provided by an embodiment of the present disclosure. As shown in FIG. 8, the device includes:
a sending module 801, configured to send indication information to the UE, in which the indication information includes a correspondence relationship between a first indication field in a MAC CE signaling and a secondary cell to be activated.

The sending module 801 is further configured to send a temporary reference signal in a determined secondary cell to be activated.

To sum up, in the apparatus for temporary reference signal transmission provided in the present disclosure, the UE receives the MAC CE signaling sent by the base station, in which the MAC CE signaling includes the first indication field, and the first indication field corresponds to the secondary cell to be activated, then the UE determines the secondary cell to be activated, and receives the temporary reference signal in the secondary cell to be activated. It can be seen that, in the embodiments of the present disclosure, the MAC CE signaling is mainly configured to trigger the transmission of the temporary reference signal of the secondary cell to be activated. That is, the MAC CE signaling is mainly configured to indicate the transmission state of the temporary reference signal of the secondary cell to be activated, without indicating transmission states of reference signals of all secondary cells, so that the overhead of MAC CE signaling can be saved, the signaling cost can be reduced, and the resources are saved. Further, transmission states of temporary reference signals of different secondary cells to be activated can be indicated through the MAC CE signaling each time, and thus the flexibility is high.

Optionally, in an embodiment of the present disclosure, the indication information is one of the following:
downlink control information;
coding information of downlink control information; or
a MAC CE signaling.

Optionally, in another embodiment of the present disclosure, the indication information includes at least one of:
a control resource set ID;
a search space ID; or
a cell ID.

Optionally, in another embodiment of the present disclosure, the first indication field corresponds to a temporary reference signal subset.

Optionally, in another embodiment of the present disclosure, the apparatus is further configured to:
determine, by the base station, the secondary cell to be activated according to configuration information of the temporary reference signal subset.

Optionally, in another embodiment of the present disclosure, the configuration information of the temporary reference signal subset is N groups of temporary reference signal configuration information among M groups of temporary reference signal configuration information of the secondary cell to be activated, in which M and N are positive integers, and N≤M.

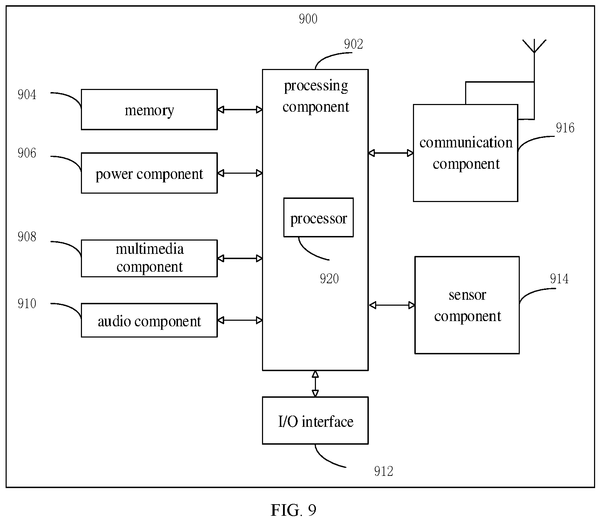

FIG. 9 is a block diagram of a user equipment UE 900 according to an exemplary embodiment of the present disclosure. For example, the UE 900 may be a mobile phone, computer, digital broadcast terminal, messaging device, game console, tablet device, medical device, fitness device, personal digital assistant, and the like.

Referring to FIG. 9, the UE 900 may include at least one of the following components: a processing component 902, a memory 904, a power component 906, a multimedia component 908, an audio component 910, an input/output (I/O) interface 912, a sensor component 913, and a communication component 916.

The processing component 902 typically controls overall operations of the UE 900, such as the operations associated with display, telephone calls, data communications, camera operations, and recording operations. The processing component 902 may include at least one processor 920 to execute instructions to perform all or part of the steps in the above described method. Moreover, the processing component 902 may include at least one module which facilitates the interaction between the processing component 902 and other components. For example, the processing component 902 may include a multimedia module to facilitate the interaction between the multimedia component 908 and the processing component 902.

The memory 904 is configured to store various types of data to support the operation of the UE 900. Examples of such data include instructions for any applications or methods operated on the UE 900, contact data, phonebook data, messages, pictures, video, etc. The memory 904 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a programmable read-only memory (PROM), a Read-Only Memory (ROM), a magnetic memory, a flash memory, a magnetic or optical disk.

The power component 906 provides power to various components of the UE 900. The power component 906 may include a power management system, at least one power source, and any other components associated with the generation, management, and distribution of power in the UE 900.

The multimedia component 908 includes a screen providing an output interface between the UE 900 and the user. In some embodiments, the screen may include a Liquid Crystal Display (LCD) and a Touch Panel (TP). In a case that the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front-facing camera and/or a rear-facing camera. When the UE 900 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 910 is configured to output and/or input audio signals. For example, the audio component 910 includes a microphone (MIC) configured to receive an external audio signal when the UE 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 913 includes one or more sensors to provide status assessments of various aspects of the UE 900. For instance, the sensor component 914 may detect an open/closed status of the UE 900, relative positioning of components, e.g., the display and the keypad of the UE 900, and the sensor component 913 may further detect a change in position of the UE 900 or a component of the UE 900, a presence or absence of user contact with the UE 900, an orientation or an acceleration/deceleration of the UE 900, and a change in temperature of the UE 900. The sensor component 913 may include a proximity sensor configured to detect the presence of nearby objects without any physical contact. The sensor component 913 may also include a light sensor, such as a CMOS or CCD image sensor, for use in imaging applications. In some embodiments, the sensor component 913 may also include an accelerometer sensor, a gyroscope sensor, a magnetic sensor, a pressure sensor, or a temperature sensor.

The communication component 916 is configured to facilitate communication, wired or wirelessly, between the UE 900 and other devices. The UE 900 can access a wireless network based on a communication standard, such as WiFi, 2G or 3G, or a combination thereof. In an exemplary embodiment, the communication component 916 receives a broadcast signal or broadcast associated information from an external broadcast management system via a physical broadcast channel. In an embodiment, the communication component 916 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In exemplary embodiments, the UE 900 may be implemented with at least one application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

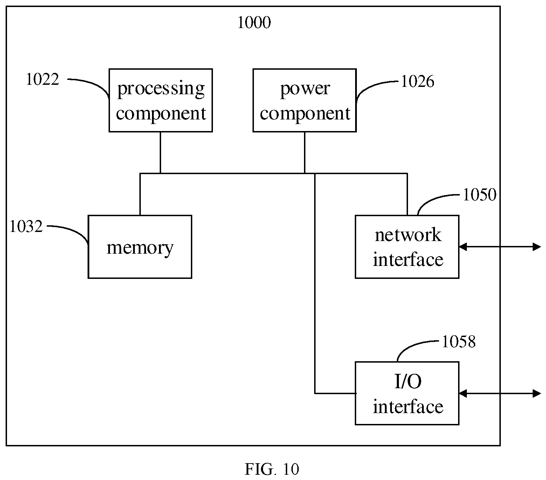

Fig. 10 is block diagram of a network device 1000 provided by an embodiment of the present disclosure. For example, the network device 1000 may be provided as a network side device. Referring to FIG. 10, the network device 1000 includes a processing component 1011, which further includes one or more processors, and a memory resource represented by a memory 1032 for storing instructions executable by the processing component 1022, such as application programs. The application program stored in the memory 1032 may include one or more modules each corresponding to a set of instructions. In addition, the processing component 1010 is configured to execute instructions to perform the above method applied to the network device, for example, the method shown in FIG. 1.

The network device 1000 may also include a power component 1026 configured to perform power management of the network device 1000, a wired or wireless network interface 1050 configured to connect the network device 1000 to a network, and an input-output (I/O) interface 1058. The network device 1000 can operate based on an operating system stored in the memory 1032, such as Windows Server^{™}, Mac OS X^{™}, Unix^{™}, Linux^{™}, FreeBSD^{™} or the like.

In the above embodiments provided in the present disclosure, the methods provided in the embodiments of the present disclosure are introduced from the perspectives of the network device and the UE respectively. In order to implement the various functions in the method provided by the above embodiments of the present disclosure, the network device and the UE may include a hardware structure and a software module, and implement the above functions in the form of a hardware structure, a software module, or a hardware structure plus a software module. A certain function among the above-mentioned functions may be implemented in the form of a hardware structure, a software module, or a hardware structure plus a software module.

In the above embodiments provided in the present disclosure, the methods provided in the embodiments of the present disclosure are introduced from the perspectives of the network device and the UE respectively. In order to implement the various functions in the method provided by the above embodiments of the present disclosure, the network device and the UE may include a hardware structure and a software module, and implement the above functions in the form of a hardware structure, a software module, or a hardware structure plus a software module. A certain function among the above-mentioned functions may be implemented in the form of a hardware structure, a software module, or a hardware structure plus a software module.

According to an embodiment of the present disclosure, there is provided a communication device. The communication device may include a transceiver module and a processing module. The transceiver module may include a sending module and/or a receiving module, the sending module is configured to realize a sending function, the receiving module is configured to realize a receiving function, and the transceiver module can realize the sending function and/or the receiving function.

The communication device may be a terminal device (such as the terminal device in the foregoing method embodiments), may also be an apparatus in the terminal device, and may also be an apparatus that can be matched and used with the terminal device. Alternatively, the communication device may be a network device, or an apparatus in the network device, or an apparatus that can be matched with the network device.

According to an embodiment of the present disclosure, there is provided another communication device. The communication device may be a network device, or a terminal device (such as the terminal device in the aforementioned method embodiments), or a chip, a chip system, or a processor that supports the network device to implement the above method, or it may be a chip, a chip system, or a processor that supports a terminal device to implement the above method. The device can be configured to implement the methods described in the above method embodiments, and for details, refer to the descriptions in the above method embodiments.

The communications device may include one or more processors. The processor may be a general purpose processor or a special purpose processor or the like. For example, it can be a baseband processor or a central processing unit. The baseband processor may be configured to process communication protocols and communication data, and the central processor may be configured to control communication devices (such as network devices, baseband chips, terminal device, terminal device chips, DUs or CUs, etc.), to perform a computer program and process data of the computer program.

Optionally, the communication device may further include one or more memories, on which computer programs may be stored. The processor executes the computer programs, so that the communication device performs the methods described in the foregoing method embodiments. Optionally, data may also be stored in the memory. The communication device and the memory can be set separately or integrated together.

Optionally, the communication device may further include a transceiver and an antenna. The transceiver may be referred to as a transceiver unit, a transceiver, or a transceiver circuit, etc., and is configured to implement a transceiver function. The transceiver may include a receiver and a sender, and the receiver may be called a receiving machine or a receiving circuit for realizing a receiving function; the sender may be called a sending machine or a sending circuit for realizing a sending function.

Optionally, the communication device may further include one or more interface circuits. The interface circuit is configured to receive code instructions and send them to the processor. The processor executes the code instructions to enable the communication device to execute the methods described in the foregoing method embodiments.

The communication device is a terminal device (such as the terminal device in the foregoing method embodiments): the processor is configured to execute any of the methods shown in FIGS. 1-4.

The communication device is a network device: the transceiver is configured to execute the method shown in any one of Fig. 5-Fig. 7.

In an implementation, the processor may include a transceiver for implementing receiving and sending functions. For example, the transceiver may be a transceiver circuit, or an interface, or an interface circuit. The transceiver circuits, interfaces or interface circuits for implementing the functions of receiving and sending can be separated or integrated together. The above-mentioned transceiver circuit, interface or interface circuit may be used for reading and writing code/data, or the above-mentioned transceiver circuit, interface or interface circuit may be used for signal transmission or transfer.

In an implementation, the processor may store a computer program, and the computer program runs on the processor to enable the communication device to execute the methods described in the foregoing method embodiments. A computer program may be embedded in a processor, in which case the processor may be implemented by hardware.

In an implementation manner, the communication device may include a circuit, and the circuit may implement the function of sending or receiving or communicating in the foregoing method embodiments. The processors and transceivers described in the present disclosure may be implemented on integrated circuits (ICs), analog ICs, radio frequency integrated circuits (RFICs), mixed-signal ICs, application specific integrated circuits (ASICs), printed circuit boards (PCB), electronic device, etc. The processor and transceiver can also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or a terminal device (such as the terminal device in the foregoing method embodiments), but the scope of the communication device described in the present disclosure is not limited thereto, and the structure of the communication device may not be limited limits. A communication device may be a stand-alone device or may be part of a larger device. For example the communication device may be:
(1) a stand-alone IC, a chip, or a chip system or subsystem;
(2) a set of one or more ICs, optionally, the set of ICs may also include storage components for storing data and computer programs;
(3) an ASIC, such as a modem;
(4) a module that can be embedded in other devices;
(5) a receiver, a terminal device, an intelligent terminal device, a cellular phone, a wireless device, a handset, a mobile unit, a vehicle-mounted device, a network device, a cloud device, artificial intelligence device, etc.;
(6) other devices.

For the case where the communications device may be a chip or a chip system, the chip includes a processor and an interface. The number of processors may be one or more, and the number of interfaces may be more than one.

Optionally, the chip also includes a memory, which is configured to store necessary computer programs and data.

Those skilled in the art can also understand that various illustrative logical blocks and steps listed in the embodiments of the present disclosure can be implemented by electronic hardware, computer software, or a combination of both. Whether such functions are implemented by hardware or software depends on the specific application and overall system design requirements. Those skilled in the art may use various methods to implement the described functions for each specific application, but such implementation should not be understood as exceeding the protection scope of the embodiments of the present disclosure.

An embodiment of the present disclosure also provides a system for determining a duration of a side link, the system includes a communication device as a terminal device (such as the first terminal device in the method embodiment above) and a communication device as a network device in the foregoing embodiments. Alternatively, the system includes a communication device as a terminal device (such as the first terminal device in the foregoing method embodiments) and a communication device as a network device in the foregoing embodiments.

The present disclosure also provides a readable storage medium on which instructions are stored. When the instructions are performed by a computer, the functions of any one of the above method embodiments are realized.

The present disclosure also provides a computer program product, which implements the functions of any one of the above method embodiments when the computer program product is performed by a computer.

In the above embodiments, all or part of them may be implemented by software, hardware, firmware or any combination thereof. When implemented using software, all or part of them may be implemented in the form of a computer program product. The computer program product includes one or more computer programs. When the computer program is loaded and executed on the computer, all or part of the processes or functions according to the embodiments of the present disclosure will be generated. The computer may be a general purpose computer, a special purpose computer, a computer network, or other programmable devices. The computer program may be stored in or sent from one computer-readable storage medium to another computer-readable storage medium, for example, the computer program may be transmitted from a website, computer, server or data center to another website site, computer, server or data center in a wired (such as coaxial cable, optical fiber, digital subscriber line (DSL)) or wireless (such as infrared, wireless, microwave, etc.) manner. The computer-readable storage medium may be any available medium that can be accessed by a computer, or a data storage device such as a server or a data center integrated with one or more available media. The available medium may be a magnetic medium (for example, a floppy disk, a hard disk, a magnetic tape), an optical medium (for example, a high-density digital video disc (digital video disc, DVD)), or a semiconductor medium (for example, a solid state disk (solid state disk, SSD)) etc.

Those of ordinary skill in the art can understand that the first, second, and other numbers involved in the present disclosure are only for convenience of description, and are not configured to limit the scope of the embodiments of the present disclosure, and also indicate the sequence.

At least one in the present disclosure can also be described as one or more, and more than one can be two, three, four or more, and the present disclosure is not limited. In the embodiments of the present disclosure, for a technical feature, the technical feature is distinguished by "first", "second", "third", "A", "B", "C" and "D", etc. The technical features described with "first", "second", "third", "A", "B", "C" and "D" have no sequence or order of magnitude among the technical features described.

Other embodiments of the invention will be readily apparent to those skilled in the art from consideration of the specification and practice of the invention disclosed herein. The present disclosure is intended to cover any modification, use or adaptation of the present invention, these modifications, uses or adaptations follow the general principles of the present invention and include common knowledge or conventional technical means in the technical field not disclosed in the present disclosure. The specification and embodiments are to be considered exemplary only, with a true scope and spirit of the present disclosure being indicated by the following claims.

It should be understood that the present disclosure is not limited to the precise constructions which have been described above and shown in the drawings, and various modifications and changes may be made without departing from the scope thereof. The scope of the present disclosure is limited only by the appended claims.

## Claims

1. A method for receiving a temporary reference signal, comprising:
receiving, by a user equipment (UE), a medium access control control element (MAC CE) signaling sent by a base station, wherein the MAC CE signaling comprises a first indication field;
determining, by the UE, a secondary cell to be activated, wherein the first indication field corresponds to the secondary cell to be activated; and
receiving, by the UE, a temporary reference signal in the secondary cell to be activated.

2. The method according to claim 1, wherein the MAC CE signaling further comprises a second indication field, and the second indication field corresponds to the first indication field.

3. The method according to claim 2, wherein one second indication field corresponds to an identifier of one secondary cell, and is configured to indicate an activation state of the secondary cell.

4. A method for sending a temporary reference signal, comprising:
sending, by a base station, a MAC CE signaling, wherein the MAC CE signaling comprises a first indication field, and the first indication field corresponds to a secondary cell to be activated;
sending, by the base station, a temporary reference signal in a determined secondary cell to be activated.

5. The method according to claim 4, wherein the MAC CE signaling further includes a second indication field, and the second indication field corresponds to the first indication field.

6. The method according to claim 5, wherein one second indication field corresponds to an identifier of one secondary cell, and is configured to indicate an activation state of the secondary cell.

7. A method for receiving a temporary reference signal, comprising:
receiving, by a UE, indication information sent by a base station, wherein the indication information comprises a correspondence relationship between a first indication field in a medium access control control element (MAC CE) signaling and a secondary cell to be activated;
determining, by the UE, the secondary cell to be activated according to the indication information; and
receiving, by the UE, a temporary reference signal in the secondary cell to be activated.

8. The method according to claim 7, wherein the indication information is one of:
downlink control information;
coding information of downlink control information; or
a MAC CE signaling.

9. The method according to claim 7, wherein the indication information comprises at least one of:
a control resource set ID;
a search space ID; or
a cell ID.

10. The method according to any one of claims 7-9, wherein the first indication field corresponds to a temporary reference signal subset.

11. The method according to claim 10, wherein determining, by the UE, the secondary cell to be activated according to the indication information, comprises:
determining, by the UE, the secondary cell to be activated according to configuration information of the temporary reference signal subset.

12. The method according to claim 11, wherein the configuration information of the temporary reference signal subset is N groups of temporary reference signal configuration information among M groups of temporary reference signal configuration information of the secondary cell to be activated, wherein M and N are positive integers, and N^M.

13. A method for sending a temporary reference signal, comprising:
sending, by a base station, indication information to a UE, wherein the indication information comprises a correspondence relationship between a first indication field in a MAC CE signaling and a secondary cell to be activated; and
sending, by the base station, a temporary reference signal in a determined secondary cell to be activated.

14. The method according to claim 13, wherein the indication information is one of:
downlink control information;
coding information of downlink control information; or
a MAC CE signaling.

15. The method according to claim 13, wherein the indication information comprises at least one of:
a control resource set ID;
a search space ID; or
a cell ID.

16. The method according to any one of claims 13-15, wherein the first indication field corresponds to a temporary reference signal subset.

17. The method according to claim 16, further comprising:
determining, by the base station, the secondary cell to be activated according to configuration information of the temporary reference signal subset.

18. The method according to claim 17, wherein the configuration information of the temporary reference signal subset is N groups of temporary reference signal configuration information among M groups of temporary reference signal configuration information of the secondary cell to be activated, wherein M and N are positive integers, and N≤M.

19. An apparatus for receiving a temporary reference signal, comprising:
a receiving module, configured to receive a medium access control control element (MAC CE) signaling sent by a base station, wherein the MAC CE signaling comprises a first indication field; and
a processing module, configured to determine a secondary cell to be activated, wherein the first indication field corresponds to the secondary cell to be activated;
the receiving module being further configured to receive a temporary reference signal in the secondary cell to be activated.

20. An apparatus for sending a temporary reference signal, comprising:
a sending module, configured to send a MAC CE signaling, wherein the MAC CE signaling comprises a first indication field, and the first indication field corresponds to a secondary cell to be activated;
the sending module being further configured to send a temporary reference signal in a determined secondary cell to be activated.

21. An apparatus for receiving a temporary reference signal, comprising:
a receiving module, configured to receive indication information sent by a base station, wherein the indication information comprises a correspondence relationship between a first indication field in a medium access control control element (MAC CE) signaling and a secondary cell to be activated; and
a processing module, configured to determine the secondary cell to be activated according to the indication information;
the receiving module being further configured to receive a temporary reference signal in the secondary cell to be activated.

22. An apparatus for sending a temporary reference signal, comprising:
a sending module, configured to send indication information to the UE, wherein the indication information comprises a correspondence relationship between a first indication field in a MAC CE signaling and a secondary cell to be activated;
the sending module being further configured to send a temporary reference signal in a determined secondary cell to be activated.

23. A communication device, comprising a processor and a memory, wherein a computer program is stored in the memory, and the processor executes the computer program stored in the memory, to cause the device to perform the method according to any one of claims 1-3 or 7-12.

24. A communication device, comprising a processor and a memory, wherein a computer program is stored in the memory, and the processor executes the computer program stored in the memory, to cause the device to perform the method according to any one of claims 4-6 or 13-18.

25. A communication device, comprising a processor and an interface circuit, wherein
the interface circuit is configured to receive code instructions and send the instructions to the processor; and
the processor is configured to run the code instructions to execute the method according to any one of claims 1-3 or 7-12.

26. A communication device, comprising a processor and an interface circuit, wherein
the interface circuit is configured to receive code instructions and send the instructions to the processor; and
the processor is configured to run the code instructions to execute the method according to any one of claims 4-6 or 13-18.

27. A computer-readable storage medium having stored thereon instructions, when being executed, enable the method according to any one of claims 1-3 or 7-12 to be implemented.

28. A computer-readable storage medium having stored thereon instructions, when being executed, enable the method according to any one of claims 4-6 or 13-18 to be implemented.
